# EUROPEAN PATENT APPLICATION

(11) **EP 3 225 364 A1**
(43) Date of publication of application: **04.10.2017**
(21) Application number: 15862582.2
(22) Date of filing: 27.11.2015
(51) Int. Cl.: B25J 9/10, B25J 13/02, B25J 18/02

(54) **ROBOT DEVICE AND ROBOT CONTROL DEVICE**

(30) Priority: 29.11.2014 JP 2014242659
(71) Applicant: Life Robotics Inc., Koto-ku Tokyo 135-0047 (JP)
(72) Inventor: YOON Woo-Keun, Tokyo 135-0047 (JP); KAWAGUCHI Masateru, Tokyo 135-0047 (JP); KURIHARA Shinji, Tokyo 135-0047 (JP)
(74) Representative: Herrero & Asociados, S.L.
(86) International application number: PCT/JP2015/083376
(87) International publication number: WO 2016/084932

(57) **Abstract**

The purpose of the present invention is to improve robot arm mechanism's operability regarding translational movement and posture change. A robot device includes: a robot arm mechanism 200 capable of being provided with an end effector at a tip thereof and including a plurality of joints; an operation section 300 for operating a movement and a posture change of the end effector; and a control section 100 for controlling driving of the joints in accordance with an operation of the operation section. The control section associates a translational operation received from the operation section with orthogonal three axes of a robot coordinate system of the robot arm mechanism to move a hand reference point. During the movement, a posture of the end effector is maintained at a posture on the robot coordinate system at the start of the translational operation. A posture change operation of the end effector input via the operation section is associated with orthogonal three axes of a hand coordinate system having a reference point of the end effector as the origin to change the posture of the end effector. At this time, a position of the hand reference point is maintained at a position on the robot coordinate system at the start of the posture change operation.

## Description

### FIELD

Embodiments described herein relate to a robot device and a robot controller.

### BACKGROUND

In recent years, a situation in which a robot is in the same space as a user is increasing. A situation in which not only a nursing robot but also an industrial robot works side by side with a worker is considered to be increased in future. Such a robot is often provided with a vertically articulated arm mechanism. The vertically articulated arm mechanism requires three-degree-of-freedom (x, y, z) regarding position and three-degree-of-freedom (ϕ, θ, ψ) regarding posture, which are generally realized by rotational joints J1, J2 and J3 called root three axes and rotational joints J4, J5 and J6 called wrist three axes. For example, a torsion joint is applied to joints J1, J4 and J6, and a bending joint is applied to joints J2, J3 and J5. An end effector such as a hand is provided at a tip of the arm. The position and posture control of the hand is realized by a homogeneous transformation matrix using parameters (such as a joint angle, extension length, link length).
In teaching, nursing care, and the like, a user is required to operate a vertical articulated arm mechanism with an operation section called a pendant to move a hand at the tip in a three-dimensional space or change the posture of the hand. The manual operation is performed from a user viewpoint (user coordinate system) or a hand viewpoint (hand coordinate system), and may not be intuitive depending on the work purpose. The user coordinate system is a coordinate system of orthogonal three axes based on a user and is distinguished from a robot coordinate system based on the arm mechanism of a robot, which is the basis of motion control. The hand coordinate system is a so-called moving coordinate system that arbitrarily moves and rotates in the user coordinate system and the robot coordinate system, and is defined by orthogonal three axes with the origin set at a reference point near the tip of the hand, for example.

When the user viewpoint is adopted to translate the hand, the operation is easy since the direction (or position) in which the hand is desired to be moved can be designated based on the user's view. However, when the posture of the hand is changed from the user viewpoint, the user needs to calculate the angle around each axis of the user coordinate system representing the hand posture, and to go through much trial and error to achieve the desired posture. In the case of the hand viewpoint, the operation of posture change is intuitive since designation can be performed for each axis of the hand coordinate system. However, translation of the hand from the hand viewpoint.

Accordingly, improvement of robot's operability for users is desired.

### BRIEF DESCRIPTION OF THE INVENTION

The purpose of the present invention is to improve robot arm mechanism's operability regarding translational movement and posture change.

The robot device of the present embodiment includes: a robot arm mechanism capable of being provided with an end effector at a tip thereof and including a plurality of joints; an operation section for operating a movement and a posture change of the end effector; and a control section for controlling driving of the joints in accordance with an operation of the operation section. The control section associates a translational operation input via the operation section with orthogonal three axes of a robot coordinate system of the robot arm mechanism to move a hand or a wrist. A posture change operation of the end effector input via the operation section is associated with orthogonal three axes of a hand coordinate system having a reference point of the end effector as the origin to change the posture of the end effector. In this posture change, the position of the reference point is maintained at a position on the robot coordinate system at the start of the posture change operation.

### BRIEF DESCRIPTION OF THE DRAWINGS

Fig. 1 is an external perspective view of a robot arm mechanism of a robot device according to the present embodiment;
Fig. 2 is a perspective view illustrating an internal structure of the robot arm mechanism in Fig. 1;
Fig. 3 is a view illustrating the robot arm mechanism in Fig. 1 with symbolic representation;
Fig. 4 is a block diagram of the robot device according to the present embodiment;
Fig. 5 is a diagram illustrating an operation surface of an operation section in Fig. 4;
Fig. 6 is a diagram concretely illustrating a hand coordinate system in Fig. 3;
Fig. 7 is a diagram illustrating definition of a hand posture according to the present embodiment;
Fig. 8 is a flowchart illustrating control processing of translational movement and posture change according to the present embodiment;
Fig. 9 is a diagram illustrating a translational movement according to the present embodiment;
Fig. 10 is a diagram illustrating a posture change by a roll, a pitch and a yaw of the hand coordinate system according to the present embodiment; and

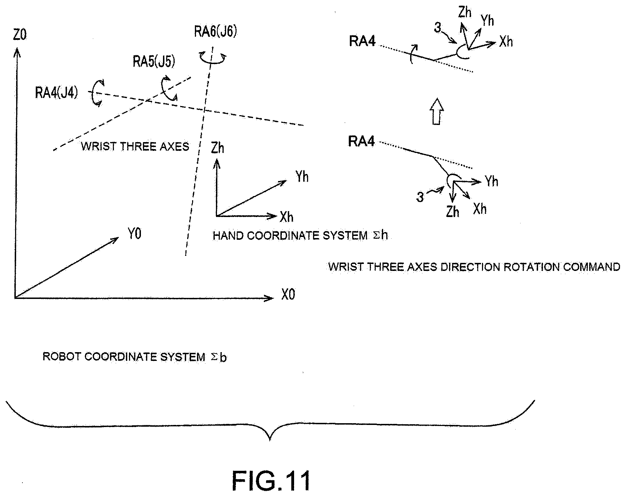

Fig. 11 is a diagram illustrating a posture change by a wrist three axes direct rotation instruction according to the present embodiment.

### DETAILED DESCRIPTION OF THE INVENTION

Hereinafter, a robot arm mechanism according to the present embodiment is described with reference to the accompanying drawings. In the following description, the same reference numerals denote components having substantially identical functions and structures, and the repeated description thereof is made only when necessary.

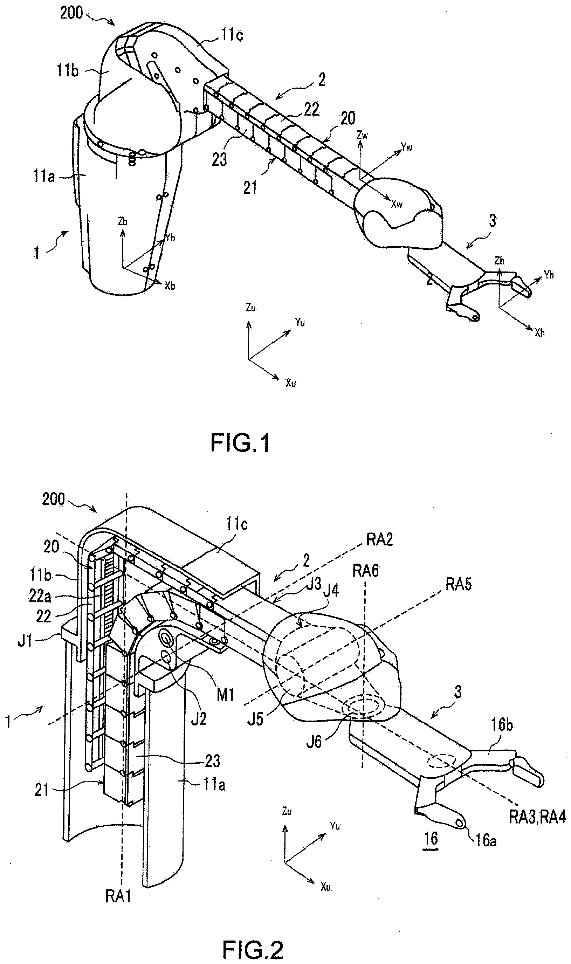

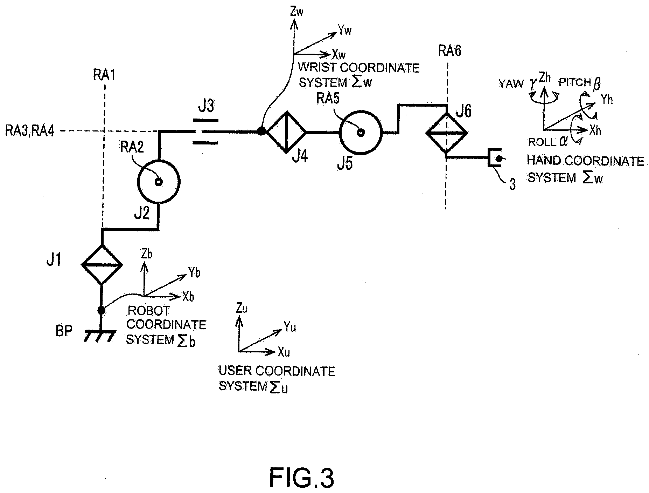

Fig. 1 is an external perspective view of a robot arm mechanism according to the present embodiment. Fig. 2 is a diagram illustrating an internal structure of the robot arm mechanism in Fig. 1. Fig. 3 is a diagram illustrating the robot arm mechanism with symbolic representation. A robot arm mechanism 200 includes a substantially cylindrical base 1 and an arm section 2 connected to the base 1. An end effector 3 is attached to a tip of the robot arm section 2. In Fig. 1, a hand section capable of holding an object is shown as the hand end-effector 3. The hand end-effector 3 is not limited to the hand section, and may be another tool, a camera, or a display. At the tip of the robot arm section 2, an adapter which can be replaced with any type of the hand end-effector 3 may be provided.

The robot arm section 2 includes a plurality (herein, six) of joints J1, J2, J3, J4, J5 and J6. The plurality of the joints J1, J2, J3, J4, J5 and J6 are arranged in order from the base 1. Generally, a first axis RA1, a second axis RA2 and a third axis RA3 are called root three axes, and a fourth axis RA4, a fifth axis RA5 and a sixth axis RA6 are called wrist three axes. The first joint J1 is a torsion joint that rotates on the first axis of rotation RA1 which is held, for example, perpendicularly to a base surface. The second joint J2 is a bending joint that rotates on the second axis of rotation RA2 perpendicular to the first axis of rotation RA1. The third joint J3 linearly extends and contracts along the third axis (axis of movement) RA3 perpendicular to the second axis of rotation RA2. The fourth joint J4 is a torsion joint that rotates on the fourth axis of rotation RA4 which matches the third axis of movement RA3, and the fifth joint J5 is a bending joint that rotates on the fifth axis of rotation RA5 orthogonal to the fourth axis of rotation RA4. The sixth joint J6 is a bending joint that rotates on the sixth axis of rotation RA6 orthogonal to the fourth axis of rotation RA4 and perpendicular to the fifth axis of rotation RA5.

The arm section 2 turns together with the hand section 3 in accordance with torsional rotation of the first joint J1. The arm section 2 rotates upward and downward on the second axis of rotation RA2 of the second joint J2 together with the hand section 3 in accordance with bending rotation of the second joint J2. An arm support body (first support body) 11a forming the base 1 has a cylindrical hollow structure formed around the axis of rotation RA1 of the first joint J1. The first joint J1 is mounted on a fixed base (not shown). When the first joint J1 rotates, the first support body 11a axially rotates in accordance with the turn of the arm section 2. The first support body 11a may be fixed on a ground plane. In this case, the arm section 2 turns independently of the first support body 11a. A second support body 11b is connected to an upper part of the first support body 11a.

The second support body 11b has a hollow structure continuous to the first support body 11a. One end of the second support body 11b is attached to a rotating section of the first joint J1. The other end of the second support body 11b is opened, and a third support body 11c is set rotatably on the axis of rotation RA2 of the second joint J2. The third support body 11c has a scaly hollow structure communicating with the first support body 11a and the second support body 11b. In accordance with the bending rotation of the second joint J2, a rear part of the third support body 11c is accommodated in or sent out from the second support body 11b. The rear part of the third joint J3, which constitutes a linear motion joint of the arm section 2, is housed inside the continuous hollow structure of the first support body 11a and the second support body 11b by retraction thereof.

The first joint J1 includes an annular fixed section and a rotating section, and is fixed to a base (not shown) at the fixed section. The first support body 11a and the second support body 11b are attached to the rotating section. When the first joint J1 rotates, the first support body 11a, the second support body 11b and the third support body 11c turn around the first axis of rotation RA1 together with the arm section 2 and the hand section 3.

The third support body 11c is set rotatably, at the lower part of its rear end, on the axis of rotation RA2 with respect to a lower side of an open end of the second support body 11b. In this way, the second joint J2 serving as the bending joint that rotates on the axis of rotation RA2 is formed. When the second joint J2 rotates, the arm section 2 rotates vertically , i.e., rotates upward and downward, on the axis of rotation RA2 of the second joint J2 together with the hand section 3.

As described above, the third joint J3 serving as a linear extension and retraction joint section constitutes a main constituent of the arm section 2. The hand section 3 described above is provided at the tip of the arm section 2. Rotation, bending and extension and retraction of the first to sixth joints J1-J6 enable positioning a two-fingered hand 16 of the hand section 3 at a given position and posture. In particular, the linear extension and retraction distance of the third joint J3 enables the hand section 3 to act on an object in a wide range from a position close to the base 1 to a position far from the base 1.

The third joint J3 is characterized by the linear extension and retraction distance realized by a linear extension and retraction arm mechanism constituting the third joint J3. The linear retractionextension and retraction distance is achieved by the structure shown in Fig. 2. The linear extension and retraction mechanism has a first connection piece column 21 and a second connection piece column 20. In an alignment pose where the arm section 2 is horizontal, the first connection piece column 21 is located below the second connection piece column 20, and the second connection piece column 20 is located above the first connection piece column 21. The first connection piece column 21 includes a plurality of first connection pieces 23 having the same U-shaped cross section and connected to form a column by pins at their back surface parts. The first connection piece column 21 is bendable in its back surface direction but conversely not bendable in its front surface direction due to the shape of the cross section of the first connection piece 23 and connection positions by the pins. The second connection piece column 20 has a substantially flat plate shape with a width substantially equivalent to that of the first connection piece 23, and includes a plurality of second connection pieces 22 connected to form a column by pins in a bendable state in both the back surface direction and the front surface direction. The first connection piece column 21 is joined to the second connection piece column 20 at the tip part of the first connection piece column 21 by a joining piece 26. The joining piece 26 has an integrated shape of the first connection piece 23 and the second connection piece 22. When the second connection piece column 20 is sent out from the third support body 11c together with the first connection piece column 21 starting with the joining piece 26, the first connection piece column 21 and the second connection piece column 20 are jointed to each other. The first connection piece column 21 and the second connection piece column 20 are joined at their tip parts by the joining piece 26, and are each held in a jointed state at their rear part by being firmly held inside the third support body 11c and prevented from being pulled out. When the first connection piece column 21 and the second connection piece column 20 are held in the jointed state, the bending of the first connection piece column 21 and the second connection piece column 20 is restricted, whereby the first connection piece column 21 and the second connection piece column 20 constitute a columnar body having a certain stiffness. When the first connection piece column 21 and the second connection piece column 20 are separated from each other, the bending restriction is canceled, and the bendable state thereof is restored. The first connection piece column 21 and the second connection piece column 20 are joined in the vicinity of the opening of the third support body 11c and are sent out. The first connection piece column 21 and the second connection piece column 20 are separated from each other in the third support body 11c, and each becomes bendable. The first connection piece column 21 and the second connection piece column 20 are bent individually and accommodated in the first support body 11a as separate bodies.

As shown in Fig. 2, a linear gear 22a is formed on the inside of each of the second connection pieces 22. The linear gears 22a are connected to form a continuous linear gear when the second connection piece column 20 has a linear shape. The second connection piece 22 is sandwiched between a roller and a drive gear (not shown) inside the third support body 11c. The linear gear 22a is engaged with the drive gear. The second connection piece column 20 is sent out from the third support body 11c together with the first connection piece column 21 by forward rotation of the drive gear by a motor M1. At that time, the first connection piece column 21 and the second connection piece column 20 are sandwiched between a pair of an upper roller and a lower roller provided in the vicinity of the opening of the third support body 11c, are pressed against each other, and are linearly sent out in a joined state along the third axis of movement RA3. The joined state of the second connection piece column 20 and the first connection piece column 21 is canceled, and they are separated from each other in the third support body 11c behind the upper roller and the lower roller by reverse rotation of the drive gear by the motor M1. The separated second connection piece column 20 and first connection piece column 21 restore their bendable state, and are guided by guide rails provided inside the second support body 11b and the third support body 11c to be bent in a direction along the first axis of rotation RA1 and housed inside the first support body 11a.

The hand section 3 is provided at the tip of the arm section 2 as shown in Fig. 1. The hand section 3 can be moved to a given position by the first joint J1, the second joint J2 and the third joint J3, and is positioned to take a given posture by the fourth joint J4, the fifth joint J5 and the sixth joint J6. The hand section 3 has two fingers 16a and 16b configured to be opened and closed. The fourth joint J4 is a torsion joint having the axis of rotation RA4 which typically matches a center axis of the arm section 2 along the extension and retraction direction of the arm section 2, that is, the axis of movement RA3 of the third joint J3. When the fourth joint J4 rotates, the hand section 3 rotates on the axis of rotation RA4 from the fourth joint J4 to the tip thereof.

The fifth joint J5 is a bending joint having the axis of rotation RA5 orthogonal to the axis of movement RA4 of the fourth joint J4. When the fifth joint rotates, the hand section 3 rotates upward and downward from the fifth joint J5 to the tip together with the hand 3. The sixth joint J6 is a bending joint having the axis of rotation RA6 orthogonal to the axis of rotation RA4 of the fourth joint J4 and perpendicular to the axis of rotation RA5 of the fifth joint J5. When the sixth joint J6 rotates, the hand 16 turns left and right.

Fig. 3 is a diagram illustrating the robot arm mechanism in Fig. 1 with symbolic representation. The robot arm mechanism realizes three-degree-of-freedom of position and three-degree-of-freedom of posture by the first joint J1, the second joint J2 and the third joint J3 which constitute the root three axes, and the fourth joint J4, the fifth joint J5 and the sixth joint J6 which constitute the wrist three axes. The first joint J1 is arranged between the first support body 11a and the second support body 11b and is formed as a torsion joint that rotates on the axis of rotation RA1. The axis of rotation RA1 is perpendicular to a base plane BP of the base on which the fixed section of the first joint J1 is installed. A Z axis is defined to be parallel to the axis of rotation RA1. A robot coordinate system (Xb, Yb, Zb) with orthogonal three axes based on the Z axis is defined.

The second joint J2 is formed as a bending joint that rotates on the axis of rotation RA2. The axis of rotation RA2 of the second joint J2 is parallel to the Xb axis in the space coordinate system. The axis of rotation RA2 of the second joint J2 is perpendicular to the axis of rotation RA1 of the first joint J1. Furthermore, the second joint J2 is offset with respect to the first joint J1 in two directions including the direction (Zb axis direction) of the first axis of rotation RA1 and the Yb axis direction perpendicular to the first axis of rotation RA1.

The second support body 11b is attached to the first support body 11a in such a manner that the second joint J2 is offset with respect to the first joint J1 in the above-described two directions. A virtual arm rod section (link part) for connecting the second joint J2 to the first joint J1 has a crank shape formed by combining two hook shaped bodies with tips bent into right angles. The virtual arm rod section is formed by the first support body 11a and the second support body 11b each of which includes a hollow structure.

The third joint J3 is formed as a linear motion joint that moves along the axis of movement RA3. The axis of movement RA3 of the third joint J3 is perpendicular to the axis of rotation RA2 of the second joint J2. In the alignment pose in which the rotation angle of the second joint J2 is zero degree, that is, the derricking angle of the arm section 2 is zero degree, and the arm section 2 is horizontal, the axis of movement RA3 of the third joint J3 is perpendicular to both the axis of rotation RA1 of the first joint J1 and the axis of rotation RA2 of the second joint J2. In the space coordinate system, the axis of movement RA3 of the third joint J3 is parallel to the Yb axis which is perpendicular to the Xb axis and the Zb axis. Furthermore, the third joint J3 is offset with respect to the second joint J2 in two directions including the direction of the axis of rotation RA2 (Yb axis direction) and the Zb axis direction orthogonal to the axis of movement RA3. The third support body 11c is attached to the second support body 11b in such a manner that the third joint J3 is offset with respect to the second joint J2 in the above-described two directions. The virtual arm rod section (link part) for connecting the third joint J3 to the second joint J2 has a hook-shaped body whose tip is vertically bent. The virtual arm rod section includes the second support body 11b and the third support body 11c.

The fourth joint J4 is formed as a torsion joint that rotates on the axis of rotation RA4. The axis of rotation RA4 of the fourth joint J4 substantially matches the axis of movement RA3 of the third joint J3. The fifth joint J5 is formed as a bending joint that rotates on the axis of rotation RA5. The axis of rotation RA5 of the fifth joint J5 is substantially orthogonal to the axis of movement RA3 of the third joint J3 and the axis of rotation RA4 of the fourth joint J4. The sixth joint J6 is formed as a torsion joint that rotates on the axis of rotation RA6. The axis of rotation RA6 of the sixth joint J6 is substantially orthogonal to the axis of rotation RA4 of the fourth joint J4 and the axis of rotation RA5 of the fifth joint J5. The sixth joint J6 is provided to turn the hand section 3 serving as an end effector and may be installed as a bending joint of which axis of rotation RA6 is substantially orthogonal to the axis of rotation RA4 of the fourth joint J4 and the axis of rotation RA5 of the fifth joint J5.

In this way, a singular point posture is structurally eliminated by replacing one bending joint of the root three axes of the plurality of joints J1-J6 with a linear motion joint, offsetting the second joint J2 with respect to the first joint J1 in two directions, and offsetting the third joint J3 with respect to the second joint J2 in two directions.

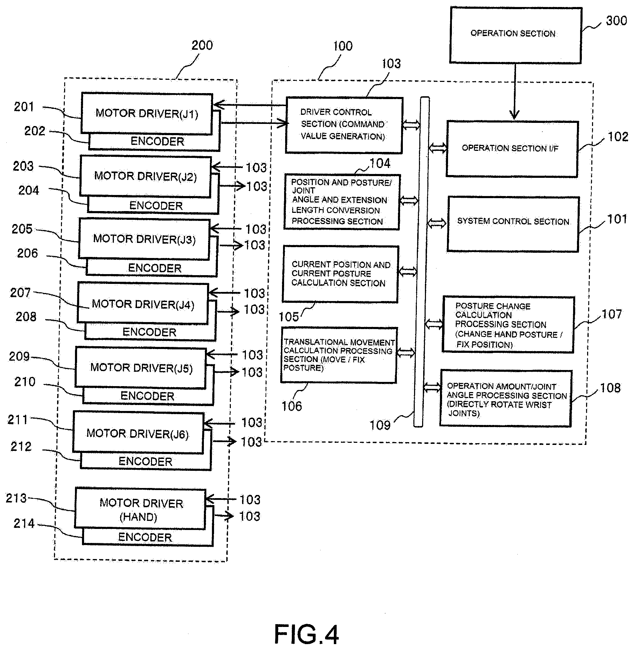

Fig. 4 is a block diagram of the robot device according to the present embodiment. For example, a stepping motor is provided as an actuator for each of the joints J1, J2, J3, J4, J5 and J6 of the arm mechanism 100. Similarly, a stepping motor is provided as an actuator for the hand section 3. These stepping motors are connected with motor drivers 201, 203, 205, 207, 209, 211 and 213, respectively. The joint angle, the extension distance, and the hand opening and closing angle of the joints J1, J2, J3, J4, J5 and J6 are measured, for example, by counting output pulses of encoders 202, 204, 206, 208, 210, 212 and 214 respectively provided for the rotations of the stepping motors.

The robot controller 100 includes sections connected with each other via a control/data bus line 109 with a system control section 100 at the center. The robot controller 100 is connected with an operation section 300 for an operator to manually move the hand section 3 and change the posture thereof via an operation section interface 102. The current position and current posture calculation processing section 105 calculates a current position of a hand reference point/wrist reference point and a current posture of the hand section 3 on a reference coordinate system (the robot coordinate system/the user coordinate system) based on the joint angles and extension length (θ1, θ2, d3, θ4, θ5 and θ6) of the joints J1, J2, J3, J4, J5 and J6 corresponding to output pulse cumulative values of the encoders 202, 204, 206, 208, 210 and 212. In the present embodiment, a user can voluntarily select one of the robot coordinate system and the user coordinate system as the reference coordinate system, and can voluntarily select one of the hand and the wrist as a focus point relating to translational movement.

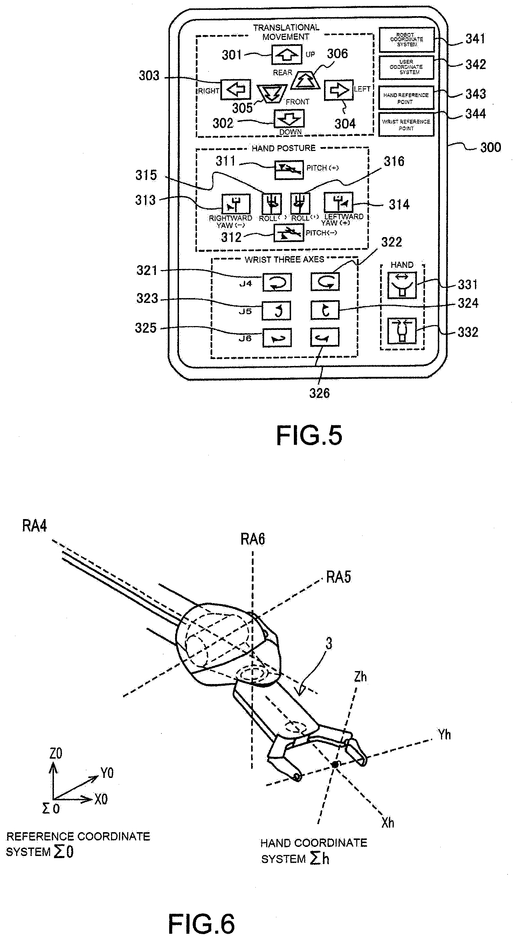

As shown in Fig. 3, the robot coordinate system Σb has the origin at a given position on the axis of rotation RA1 of the first joint J1, and the axis of rotation RA1 is defined as the Zb axis, and the Xb axis and the Yb axis are defined to be orthogonal to the Zb axis. The user coordinate system Σu is an orthogonal three axes coordinate system (Xu, Yu, Zu) based on a user who operates the robot device, and a homogeneous transformation matrix Tbu that defines the relationship between the user coordinate system Σu and the robot coordinate system Σb may be obtained by measuring a positional relationship and a rotational relationship between the user coordinate system Σu and the robot coordinate system Σb using an existing sensor method; alternatively, if the position and posture of the user with respect to the robot device are fixed, a preliminarily calculated homogeneous transformation matrix Tbu may be always used. As shown in Fig. 6, the hand coordinate system Σh has the origin at the center position (referred to as a hand reference point) between two fingers at the tip of the hand section 3, the Xh axis is defined to extend in a front-back direction of the hand section 3, the Zh axis is defined to be parallel to the axis of pivot RA6, and the Yh axis is defined to be orthogonal to these two axes.

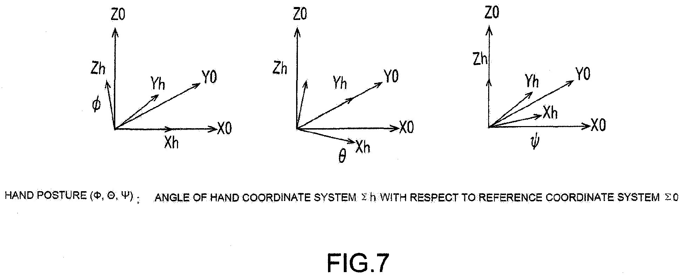

As shown in Fig. 7, the hand posture is expressed by rotation angles (rotation angle ϕ around X0 axis, rotation angle θ around Y0 axis, rotation angle ψ around Z0 axis) around the orthogonal three axes with respect to the reference coordinate system Σ0 (the robot coordinate system Σb or the user coordinate system Σu) of the hand coordinate system Σh. The wrist coordinate system Σw has the origin on the axis of rotation RA4 of the fourth joint J4 and at a rear position of the fourth joint J4 (referred to as a wrist reference point), the axis of rotation RA4 is defined as the Xw axis, the Yw axis is defined to be parallel to the axis of rotation RA5 of the fifth joint J5, and the Zw axis is defined to be orthogonal to these two axes.

The position and posture of the hand coordinate system Σh seen from the robot coordinate system Σb are obtained by a homogeneous transformation matrix Tbh (parameters (θ1, θ2, d3, θ4, θ5 and θ6)), and the position and posture of the wrist coordinate system Σw seen from the robot coordinate system Σb are obtained by a homogeneous transformation matrix Tbw (parameters (θ1, θ2 and d3)). The hand posture and the position (the origin of the hand coordinate system Σh) of the hand reference point on the robot coordinate system Σb are calculated from the parameters (θ1, θ2, d3, θ4, θ5 andθ6) at that time by using homogeneous transformation matrix Tbh at the current position/current posture calculation processing section 105. The position (the origin of the hand coordinate system Σw) of the wrist reference point on the robot coordinate system Σb is calculated from the parameters (θ1, θ2 and d3) at that time by using a homogeneous transformation matrix Tbw at the current position/current posture calculation processing section 105. Similarly, the hand posture and the position of the hand reference point on the user coordinate system Σu are calculated from the parameters (θ1, θ2, d3, θ4, θ5 and θ6) at that time by using a homogeneous transformation matrix Tuh at the current position/current posture processing section 105. The position of the wrist reference point on the user coordinate system Σu is calculated from the parameters (θ1, θ2 and d3) at that time by using homogeneous transformation matrix Tuw at the current position/current posture calculation processing section 105.

When attention is focused on the hand, the translational movement is a movement of the hand along each axis of the orthogonal three axes of the reference coordinate system which is performed with the hand maintaining the hand posture at the start of the translational movement operation on the robot coordinate system Σb or user coordinate system Σu selected as the reference coordinate system by the user. When attention is focused on the wrist, a translational movement is a movement of the wrist along each axis of the orthogonal three axes on the robot coordinate system Σb or the user coordinate system Σu, and in this case, the control to maintain the hand posture is not performed, and the hand posture changes with the movement of the wrist. As in the case where the hand is translated, the control to maintain the hand posture may be performed even when the wrist is translated.

In calculation processing required for the movement of the hand or the wrist, the hand reference point or the wrist reference point is used. The current position of the hand reference point on the robot coordinate system Σb or the user coordinate system Σu is expressed as (Xh(1), Yh(1), Zh(1)), and the movement target position is expressed as (Xh(2),Yh(2), Zh (2)). The current hand posture on the robot coordinate system Σb or the user coordinate system Σu is expressed as (ϕh (1), θh (1), ψh (1)). The target posture of the hand on the robot coordinate system Σb or the user coordinate system Σu is expressed as (ϕh (2), θh (2), ψh(2)). In the translational movement, during the movement, the hand is maintained at the posture (ϕh(1), θh(1), ψh(1)) at the start of the movement operation. In the case of the translational movement with attention focused on the wrist, in other words, when the wrist reference point is selected as the reference of calculation processing, the current position of the wrist reference point is expressed as (Xw(1), Yw(1), Zw (1)), and the movement target position is expressed as (Xw (2), Yw(2), Zw(2)). In the case of the translational movement with attention focused on the hand, in other words, when the hand reference point is selected as the reference of calculation processing, during the movement, the hand posture is maintained at the posture (ϕh(1),θh(1),ϕh(1)) at the start of the movement operation. However, when the wrist reference point is selected as the movement reference, the hand posture is not controlled during the movement, in other words, the rotation control of the joints J4, J5 and J6 of the wrist three axes is not performed, whereby the hand posture changes on the robot coordinate system Σb or the user coordinate system Σu in accordance with the movement of the wrist.

In the present embodiment, there are two types of posture change: the first mode in which the hand posture is changed by rotating the hand coordinate system Σh around Xh axis (roll α), around the Yh axis (pitch β), around the Zh axis (yaw γ) on the reference coordinate system with the hand position, that is, the origin of the hand coordinate system Σh, fixed on the reference coordinate system, ; and the second mode in which the hand posture is consequently changed by directly rotating the joints J4, J5 and J6 of the wrist three axes. In the former first mode, a unit angle (roll Δα, pitch Δβ or yaw Δγ) relating to the axis of rotation (Xh axis, Yh axis or Zh axis) designated by the user is applied to a rotation matrix relating to the Xh axis, the Yh axis and the Zh axis of the hand coordinate system Σh, whereby the current hand posture (Φh(1), θh(1), ψh(1)) on the robot coordinate system Σb or the user coordinate system Σu is converted into the target posture (ϕh(2), θh(2), ψh(2)) of the hand after a lapse of a minute unit time. If the posture change operation is continued by the user, the unit rotation processing is repeated over the continuation period. The posture change calculation processing section 107 repeatedly executes the target posture calculation processing for realizing the posture change as described above during the continuation period. In this mode, the position (Xh(1), Yh(1), Zh(1)) of the hand reference point/wrist reference point at the start of the posture change operation is maintained.

In the latter second mode, during a period of time in which the user designates rotation of one of the joints J4, J5 and J6 of the wrist three axes, the operation amount/joint angle conversion processing section 108 repeatedly outputs a unit rotation angle given in advance to each of the joints J4, J5 and J6 every unit time. In this mode, the position (Xh(1), Yh(1), Zh(1)) of the hand reference point changes in accordance with the rotation.

A position and posture/joint angle and extension length conversion processing section 104 converts the target position of the hand reference point or the wrist reference point and the target posture of the hand calculated by a translational movement calculation processing section 106 or a posture change calculation processing section 107 into the joint angles and extension length (θ1, θ2, d3, θ4, θ5, θ6) of the joints J1, J2, J3, J4, J5 and J6 for realizing the target position and the target posture by, for example, algebraic solution of inverse kinematics. The driver control section 103 converts the change amounts from the current values of the joint angles and extension length (θ1, θ2, d3, θ4, θ5, θ6) of the joints J1, J2, J3, J4, J5 and J6 given by the position and posture/joint angle and extension length conversion processing section 104 into command values (pulse numbers or the like) and supplies them to motor drivers 201, 203, 205, 207, 209 and 211. In accordance with the command values, pulses are supplied from motor drivers 201, 203, 205, 207, 209 and 211 to the stepping motors to cause rotations of predetermined angles and extension or retraction of a predetermined length. As a result, the hand or wrist moves to the target position, and the hand section 3 changes to take the target posture. On the other hand, since the rotation angles are directly given from the operation amount/joint angle conversion processing section 108 to the driver control section 103, the driver control section 103 converts the rotation angles into command values and supplies them to motor drivers 207, 209 and 211. In accordance with the command values, pulses are supplied from motor drivers 207, 209 and 211 to the stepping motors, and the joints J4, J5 and J6 constituting the wrist three axes each rotate by a unit angle. During the operation by the user, the rotation is repeated.

As for the posture designation by the user, it is intuitive and advantageous to focus attention on the hand coordinate system Σh and make an input with the three components (α, β, γ) around the axes; however, in the posture calculation processing, it is sometimes more efficient to perform calculation by using a four-dimensional representation called quaternion rather than representation with the three components (Δα, Δβ, Δγ). As is well known, in this case, quaternion is a representation in which a posture is expressed by defining a composite axis of rotation as one axis determined by rotation angles (ϕ, θ, ψ) of three axes, not the rotation angles (ϕ, θ, ψ) of the axes of the hand coordinate system Σh in the reference coordinate system, and expressing a posture by using the composite axis and the rotation angle around the composite axis. The posture calculation may be processed by expressing the hand posture with the quaternion.

The method for the movement control of the hand and posture is not limited to the method of obtaining the target position and posture and deriving the joint angles and extension length for realizing the target position and posture by inverse kinematical calculation, and the movement control of the hand and the posture may be performed by obtaining minute changes of the joint angles and extension length from minute changes of the hand position and the posture by using the inverse matrix of Jacobian given by partial differentiation of a vector representing the hand position and posture by a joint angle.

Fig. 5 shows a configuration example of the operation section 300. The operation section 300 includes buttons 341 and 342 for the user to voluntarily select one of the robot coordinate system and the user coordinate system as the above-described reference coordinate system, buttons 343 and 344 for the user to voluntarily select one of the hand reference point and the wrist reference point as a focus point relating to the translational movement, operation buttons 301-306 provided for respective directions of the translational movement, operation buttons 311-316 provided for respective axes of rotation and rotation directions of the posture change according to the first mode, operation buttons 321-326 provided for the respective joints J4-J6 and rotation directions of the posture change according to the second mode, and opening and closing buttons 331 and 332 of the hand section 3. These operation buttons 301-306, 311-316, 321-326, 331 and 332, and 341-344 may be configured by mounting physical buttons, or may be configured by a display provided with a touch panel.

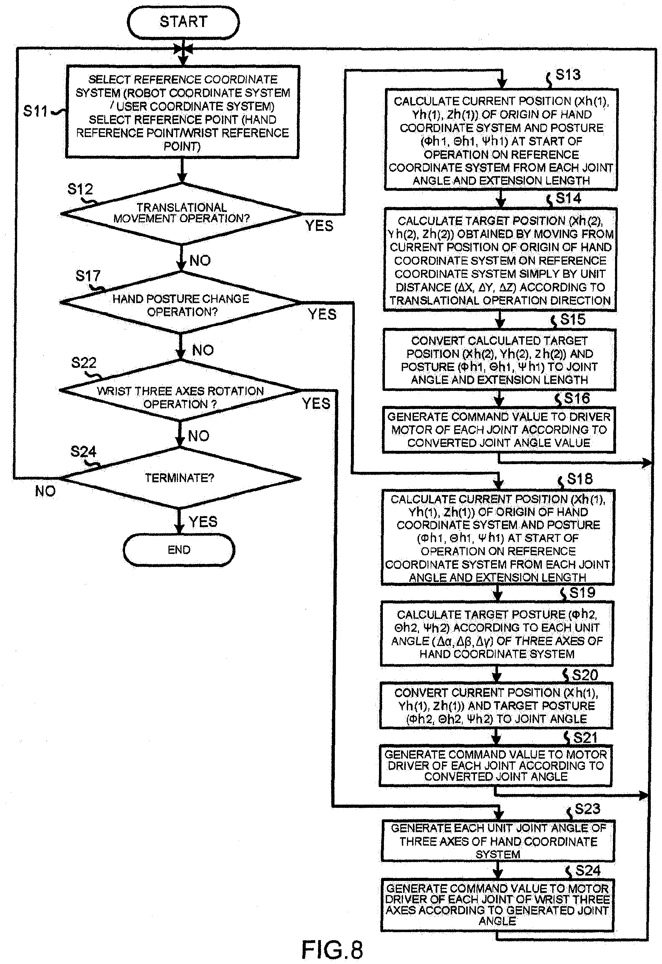

Fig. 8 is a flowchart illustrating control processing of the translational movement and hand posture change according to the present embodiment. First, buttons 341 and 342 of the operation section 300 are selectively pressed. In this way, one of the robot coordinate system and the user coordinate system is selected as the reference coordinate system. Buttons 343 and 344 are selectively pressed. In this way, one of the hand reference point and the wrist reference point is selected as the focus point relating to the translational movement. Let us assume the robot coordinate system is selected as the reference coordinate system, and the hand reference point is selected as the focus point in the translational movement. The system control section 101 waits for operations by the user on operation buttons 301-306 for the translational movement of the operation section 300, operation buttons 311-316 for the posture change according to the first mode, and operation buttons 321-326 for the posture change according to the second mode (steps S12, S17, S22 and S24).

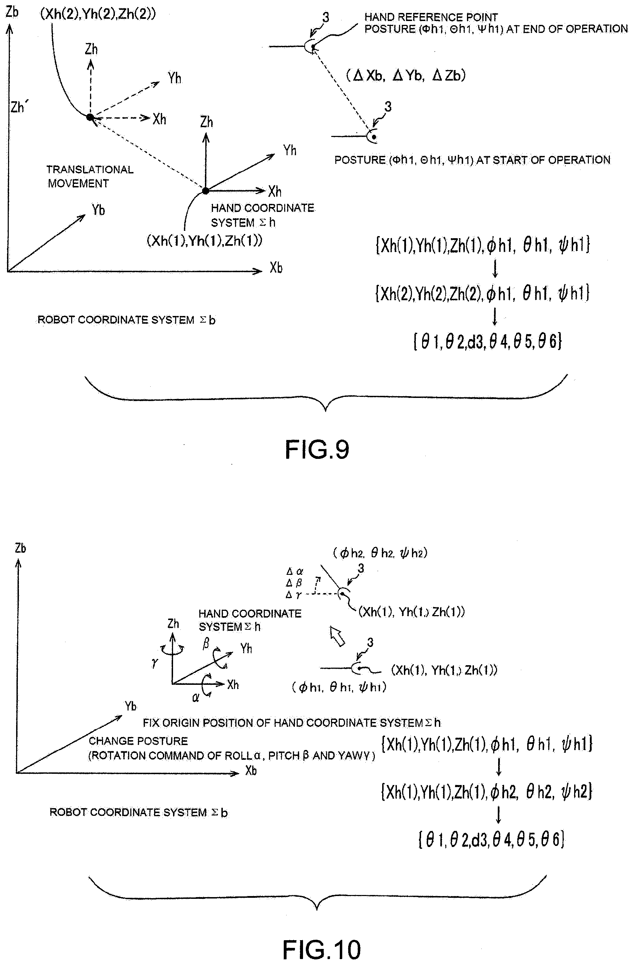

As shown in Fig. 9, when one of operation buttons 301-306 for the translational movement is pressed (S12), the joint angles and extension length (θ1, θ2, d3, θ4, θ5, θ6) of the joints J1, J2, J3, J4, J5 and J6 are calculated based on output pulse cumulative values of the encoders 202, 204, 206, 208, 210 and 212 by the current position and current posture calculation section 105 under control of the system control section 101, and based on them, the current posture (ϕh(1), θh(1), ψh(1)) of the hand section 3 and the current position (Xh(1), Yh(1), Zh(1)) of the hand reference point/the wrist reference point (herein, the hand reference point) on the reference coordinate system (herein, the robot coordinate system) are calculated (S13).

At the translational movement calculation processing section 106, the movement target position (Xh(2), Yh(2), Zh(2)) is calculated by adding a predetermined unit distance (ΔX, ΔY, ΔZ) to the current position (Xh(1), Yh(1), Zh(1)) of the hand reference point on the robot coordinate system Σb with respect to polarity (+Xb, -Xb, +Yb, -Yb, +Zb, -Zb) of one axis of the orthogonal three axes of the robot coordinate system Σb corresponding to one of the operation buttons 301-306 operated by the user (S14). The data of the calculated movement target position (Xh(2), Yh(2), Zh(2)) is transmitted to the position and posture/joint angle and extension length conversion processing section 104 together with the data of the current posture (ϕh(1), θh(1), ψh(1)) at the start of the translational operation. The position and posture/joint angle and extension length conversion processing section 104 calculates the joint angles and extension length (θ1, θ2, d3, θ4, θ5 and θ6) of the joints J1, J2, J3, J4, J5 and J6 for realizing each of the movement target position (Xh(2), Yh(2), Zh(2)) and the current posture (ϕh(1), θh(1), ψh(1)) at the start of the translational operation (S15). The driver control section 103 generates command values (pulse numbers or the like) from the change amounts from the current values of the joint angles and extension length (θ1, θ2, d3, θ4, θ5 and θ6) of the joints J1, J2, J3, J4, J5 and J6 given by the position and posture/joint angle and extension length conversion processing section 104 and supplies the command values to the respective motor drivers 201, 203, 205, 207, 209 and 211 (S16). The stepping motors of the joints J1, J2, J3, J4, J5 and J6 are driven by the pulses of the motor drivers 201, 203, 205, 207, 209 and 211, and the joints J1, J2, J3, J4, J5 and J6 rotate, and extend or contract. As a result, the hand or wrist moves in parallel with one of orthogonal three axes on the robot coordinate system Σb while maintaining the hand posture (ϕh(1), θh(1), ψh(1)) on the robot coordinate system Σb at the start of the translational movement operation. Steps S13 to S16 are repeated for a period of time in which any one of the operation buttons 301-306 is pressed by the user. The hand posture is maintained when the hand moves. When the wrist moves, the control to maintain the hand posture is not performed. When the wrist is moved, the control to maintain the hand posture may be performed as done when the hand posture is moved. When the user coordinate system Σu is selected as the reference coordinate system, the same processing is performed except that the axis of movement is different, and in this case, the hand moves in parallel with each axis of the user coordinate system Σu while maintaining the hand posture on the user coordinate system Σu.

Next, when one of the operation buttons 311-316 for the posture change according to the first mode is pressed (S17), the current position and current posture calculation processing section 105 calculates the current posture (ϕh (1), θh (1), ψh (1)) of the hand section 3 and the current position (Xh (1), Yh (1), Zh(1)) of the hand reference point on the robot coordinate system under the control of the system control section 101 (S18) . Operation buttons 311 and 312 correspond to (+)/(-) rotation (pitch β) on the Yh axis, operation buttons 313 and 314 correspond to (+)/(-) rotation (yaw γ) on the Zh axis, and operation buttons 315 and 316 correspond to (+)/(-) rotation (roll α) on the Xh axis of the hand coordinate system Σh. The posture change calculation processing section 107 applies a unit angle (roll; Δα, pitch; Δβ, yaw; Δγ) relating to the axis of rotation (Xh axis, Yh axis or Zh axis) designated by the user to a rotation matrix relating to the Xh axis, the Yh axis, or the Zh axis of the hand coordinate system Σh, threby generating the target posture (ϕh(2), θh(2), ψh(2)) of the hand from the current hand posture (ϕh(1), θh(1), ψh(1)) on the robot coordinate system Σb (S19). The data of the generated target posture (ϕh(2), θh(2), ψh(2)) is transmitted to the position and posture/joint angle and extension length conversion processing section 104 together with the data of the current position ((Xh(1), Yh(1), Zh(1)) at the start of the posture change operation. The position and posture/joint angle and extension length conversion processing section 104 calculates the joint angles and extension length (θ1, θ2, d3, θ4, θ5 and θ6) of the joints J1, J2, J3, J4, J5 and J6 for realizing the target posture (ϕh(2), θh(2), ψh(2)) and the position (ϕh(1), Yh(1), Zh(1)) (S20).

The driver control section 103 generates command values (pulse numbers or the like) from the change amounts with respect to the current values of the joint angles and extension length (θ1, θ2, d3, θ4, θ5 and θ6) of the joints J1, J2, J3, J4, J5 and J6 given by the position and posture/joint angle and extension length conversion processing section 104 and supplies the command values to the respective motor drivers 201, 203, 205, 207, 209 and 211 (S21). The stepping motors of the joints J1, J2, J3, J4, J5 and J6 are driven by the pulses of the motor drivers 201, 203, 205, 207, 209 and 211, and the joints J1, J2, J3, J4, J5 and J6 rotate, and extend or contract. As a result, the hand section 3 rotates on one of the orthogonal three axes of the hand coordinate system Σh and changes its posture while maintaining the hand posture (Xh(1), Yh(1), Zh(1)) on the robot coordinate system Σb at the start of the posture change operation. Steps S18 to S21 are repeated over the period of time in which any one of the operation buttons 311-316 is pressed by the user and, while maintaining the hand position, the hand section 3 continuously rotates on each axis of the orthogonal three axes of the hand coordinate system Σh to change its posture. When the user coordinate system Σu is selected as the reference coordinate system, the hand section 3 rotates on one of the orthogonal three axes of the hand coordinate system Σh and changes its posture while maintaining the hand position (Xh(1), Yh(1), Zh(1)) on the user coordinate system Σu at the start of the posture change operation, and the appearance of the movement during the posture change is the same as that in the case where the robot coordinate system Σb is selected as the reference coordinate system.

In the posture change, since the hand section 3 of the hand is rotated in its roll, pitch and yaw direction swith its hand position fixed, the posture of the hand section 3 can be intuitively changed with respect to the object.

Next, when one of the operation buttons 321-326 for the posture change according to the second mode is pressed (S22), under the control of the system control section 101, the operation amount/joint angle processing section 108 generates a unit rotation angle given in advance to each of joints J4, J5, and J6 every unit time during the period of time in which the user designates rotation of one of the joints J4, J5 and J6 of the wrist three axes (S23). The driver control section 103 generates a command value (pulse number or the like) corresponding to the unit rotation angle received from the operation amount/joint angle conversion processing section 108 and supplies it to one of motor drivers 207, 209 and 211 (S24). The stepping motor of one of joints J4, J5 and J6 which constitute the wrist three axes is driven by the pulse of one of the motor drivers 207, 209 and 211, and one of joints J4, J5 and J6 rotates. The position (Xh(1), Yh(1), Zh(1)) of the hand reference point changes in accordance with the rotation of one of joints J4, J5 and J6. Steps S23-S24 are repeated over the period of time in which any one of the operation buttons 321-326 is pressed by the user, and the hand posture is changed by the rotation of one of joints J4, J5 and J6.

The translational movement in two directions may be designated simultaneously, and the posture change on two axes may be designated simultaneously. Furthermore, the translational movement and the posture change may be designated simultaneously. In these cases, the position and posture are combined, and a command values are generated in accordance with the combination position and the combination posture to drive the stepping motors.

As described above, according to the present embodiment, it is possible to designate the movement along each of the orthogonal three axes by voluntarily selecting the robot coordinate system Σb or the user coordinate system Σu for the translational movement; on the other hand, in the hand posture change, the hand posture can be changed by designating rotation on each of the orthogonal three axes of the hand coordinate system Σh of the hand section 3; at that time, the hand position is fixed; and the rotations of the wrist three axes can be separately and intuitively designated, which can remarkably improve robot's operability regarding translational movement and posture change.

While certain embodiments of the present invention have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a robot coordinate system of the robot arm mechanism, and controls driving of the joints to move a hand or a wrist, and
the control section associates a posture change operation of the end effector input via the operation section with orthogonal three axes of a hand coordinate system having a hand reference point as an origin, and controls driving of the joints to change a posture of the end effector on the robot coordinate system and maintain a position of the hand reference point at a position on the robot coordinate system at a start of the posture change operation.

2. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a user coordinate system relating to a user who operates the operation section, and controls driving of the joints to move a hand or a wrist, and
the control section associates a posture change operation of the end effector input via the operation section with orthogonal three axes of a hand coordinate system having a hand reference point as an origin, and controls driving of the robot to change a posture of the end effector and maintain a position of the hand reference point at a position on the user coordinate system at a start of the posture change operation.

3. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a robot coordinate system of the robot arm mechanism, and controls driving of the joints to move a hand or a wrist, and
the control section associates an operation on the end effector input via the operation section directly with rotation of each of three joints of the joints which relate to wrist three axes, and controls driving of the joints.

4. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a user coordinate system relating to a user who operates the operation section, and controls driving of the joints to move a hand or a wrist, and
the control section associates an operation on the end effector input via the operation section directly with rotation of each of three joints of the joints which relate to wrist three axes, and controls driving of the joints.

5. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a robot coordinate system of the robot arm mechanism, and controls driving of the joints to move a hand or a wrist,
the control section associates a posture change operation of the end effector input via the operation section with orthogonal three axes of a hand coordinate system having a hand reference point as an origin, and controls driving of the joints to change a posture of the end effector on the robot coordinate system and maintain a position of the hand reference point at a position on the robot coordinate system at a start of the posture change operation, and
the control section associates the operation on the end effector input via the operation section directly with rotation of each of three joints of the joints which relate to wrist three axes, and controls driving of the joints.

6. A robot device, comprising:
a robot arm mechanism capable of being provided with an end effector at a tip thereof and including a plurality of joints;
an operation section configured to operate a movement and a posture change of the end effector; and
a control section configured to control driving of the joints in accordance with an operation of the operation section, wherein
the control section associates a translational operation input via the operation section with orthogonal three axes of a user coordinate system relating to a user who operates the operation section, and controls driving of the joints to move a hand or a wrist,
the control section associates a posture change operation of the end effector input via the operation section with orthogonal three axes of a hand coordinate system having a hand reference point as an origin, and controls driving of the joints to change a posture of the end effector on the user coordinate system and maintain a position of the hand reference point at a position on the user coordinate system at a start of the posture change operation, and
the control section associates the operation on the end effector input via the operation section directly with rotation of each of three joints of the joints which relate to wrist three axes, and controls driving of the joints.

7. The robot device according to claim 1, wherein three joints of the joints which relate to root three axes include a linear extension and retraction joint.

8. A robot controller, comprising:
an operation section configured to operate a movement and a posture change of an end effector provided on robot arm mechanism including a plurality of joints; and
a control signal generation section configured to generate a control signal to control driving of the joints in accordance with an operation of the operation section, wherein
the control signal includes a control signal for associating a translational operation input via the operation section with orthogonal three axes of a robot coordinate system of the robot arm mechanism and moving a hand or a wrist, and
the control signal includes a control signal for associating a posture change operation of the end effector input via the operation section with orthogonal three axes of a hand coordinate system having a hand reference point as an origin, changing a posture of the end effector on the robot coordinate system, and maintaining a position of the hand reference point at a position on the robot coordinate system at a start of the posture change operation.

9. A robot controller, comprising:
an operation section configured to move an end effector provided at a tip of a robot arm mechanism including a plurality of joints and change a posture of the end effector; and
a control signal generation section configured to generate a control signal to control driving of the joints in accordance with an operation of the operation section, wherein
the control signal includes a control signal for associating a translational operation input via the operation section with orthogonal three axes of a robot coordinate system of the robot arm mechanism and moving a hand or a wrist, and
the control signal includes a control signal for associating an operation on the end effector input via the operation section directly with rotation of each of three joints of the joints which relate to wrist three axes.
